(19) **Europäisches Patentamt**
**European Patent Office**
**Office européen des brevets**

(11) **EP 2 342 576 B1**

(12) **FASCICULE DE BREVET EUROPEEN**

(45) Date de publication et mention
de la délivrance du brevet:
**05.12.2012 Bulletin 2012/49**

(21) Numéro de dépôt: **09747900.0**

(22) Date de dépôt: **23.09.2009**

(51) Int Cl.:
***G01S 19/30*** (2010.01)          ***G01S 19/37*** (2010.01)
***G01S 19/22*** (2010.01)

(86) Numéro de dépôt international:
**PCT/FR2009/051795**

(87) Numéro de publication internationale:
**WO 2010/040924 (15.04.2010 Gazette 2010/15)**

(54) **SYSTÈME ET PROCÉDÉ DE DÉTERMINATION D'UN RÉCEPTEUR, ET RÉCEPTEUR ASSOCIÉ**

SYSTEM UND VERFAHREN ZUM BESTIMMEN EINES EMPFÄNGERS UND DIESBEZÜGLICHER EMPFÄNGER

SYSTEM AND METHOD FOR DETERMINING A RECEIVER, AND ASSOCIATED RECEIVER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **08.10.2008 FR 0856813**

(43) Date de publication de la demande:
**13.07.2011 Bulletin 2011/28**

(73) Titulaires:
• **Centre National d'Etudes Spatiales**
**75001 Paris (FR)**
• **Groupe des Ecoles des Télécommunications (GET)**
**Institut National des Télécommunications (INT)**
**91011 Evry Cedex (FR)**

(72) Inventeurs:
• **JEANNOT, Marc**
**F-31450 Pompertuzat (FR)**
• **JARDAK, Nabil**
**F- 31600 Muret (FR)**
• **SAMAMA, Nel**
**F-94430 Chennevieres-sur-marne (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A- 0 552 975          EP-A- 1 793 236**
**US-A1- 2004 184 516**

• **KAPLAN ET AL: "UNDERSTANDING GPS - Principles and Applications" UNDERSTANDING GPS PRINCIPLES AND APPLICATIONS, XX, XX, 1 janvier 1900 (1900-01-01), pages 142-150, XP002165743**
• **NABIL JARDAK ET AL: "Implementation Of An Optimized Code Loop For Indoor Positioning" ION GNSS 20TH INTERNATIONAL TECHNICAL MEETING OF THE SATELLITE DIVISION, FORT WORTH, TX, 28 septembre 2007 (2007-09-28), pages 1396-1404, XP002526357**

**Description**

La présente invention concerne un système et un procédé de détermination de la position d'un récepteur, ainsi que le récepteur associé.

Le système de positionnement global (de l'anglais « Global Positioning System ») plus connu par son sigle GPS, permet à des personnes munies d'un récepteur de se localiser sur terre, sur mer et dans les airs. Ce système GPS comprend une trentaine de satellites qui émettent en permanence des signaux électromagnétiques. Ces signaux sont par exemple constitués par un signal de code CIA à 1,023 MHz modulant une porteuse à 1575,42 MHz. La modulation est de type BPSK. Le signal de code CIA est généralement appelé code.

Un récepteur d'un système GPS capte les signaux émis par au moins quatre satellites et peut, en calculant les temps de propagation de ces signaux entre les satellites et lui, connaître sa distance par rapport à ceux-ci et, par trilatération, situer précisément sa position en trois dimensions. Pour mesurer ce temps, le récepteur GPS compare l'heure d'émission incluse dans le signal émis par le satellite et celle de réception du signal par le récepteur. Cette mesure, après multiplication par la célérité du signal, fournit une pseudo distance, assimilable à une distance, mais entachée d'une erreur de synchronisation des horloges du satellite et du récepteur, d'une erreur due à la traversée de l'atmosphère et d'une erreur provoquée par l'effet Doppler induit par le mouvement du satellite et du récepteur. Un récepteur GPS connu est décrit par exemple dans la demande de brevet EP 1 793 236 A.

Connaissant les positions des satellites à l'heure d'émission des signaux et les pseudo distances mesurées, le récepteur est en mesure de résoudre un système d'équations dont les quatre inconnues sont la position du récepteur en trois dimensions et le décalage de son horloge par rapport au temps GPS. Ce calcul est résolu dès lors que l'on dispose de signaux transmis par quatre satellites.

Toutefois, lorsque le récepteur se trouve en ville ou dans un canyon, les signaux provenant des satellites sont souvent réfléchis par des éléments du paysage tels que des bâtiments ou des arbres de sorte que le récepteur réceptionne plusieurs composantes du même signal électromagnétique. Ce phénomène est appelé phénomène de trajets multiples.

Or, seule la composante du signal en visibilité directe permet de déterminer la position du récepteur puisque les signaux réfléchis sont représentatifs du trajet satellite-zone de réflexion, zone de réflexion-récepteur. Il est donc nécessaire « d'éliminer » les composantes du signal issues des réflexions.

Or, la présence de ces signaux réfléchis est imprévisible. Chaque signal réfléchi atteint le récepteur GPS après un certain temps par rapport au signal direct puisqu'il voyage sur une distance plus grande. Ce temps représente un retard supplémentaire caractérisant le trajet réfléchi. Ce dernier est aussi caractérisé par la phase de sa porteuse qui est généralement différente de la phase porteuse du signal direct. De plus un trajet réfléchi possède une amplitude généralement inférieure à celle du signal direct principalement à cause des pertes de puissance par réflexion. Par suite, un signal réfléchi est caractérisé par son retard, sa phase et son amplitude.

La position calculée par le récepteur GPS en présence de trajets multiples est différente de sa position réelle. Les trajets multiples induisent donc une erreur sur le calcul de la pseudo-distance qui se transforme en une erreur sur la position.

La présente invention a pour but de proposer un récepteur apte à déterminer une position précise du récepteur, même en présence de trajets réfléchis (ou trajets multiples).

A cet effet, l'invention a pour objet un récepteur d'un système de détermination d'au moins une information de positionnement dudit récepteur, le système comprenant au moins un générateur d'un signal appelé code, le récepteur comprenant :

- des moyens de réception du code ;
- des moyens de génération d'un signal identique au code, appelé réplique ponctuelle ;
- des moyens de décalage temporel de la réplique ponctuelle comprenant des moyens de génération d'une réplique en avance ;
- un discriminateur de code propre à déterminer le déphasage entre la réplique ponctuelle et le code réceptionné ;
- des moyens de détermination de l'information de positionnement du récepteur à partir du déphasage déterminé ;

caractérisé en ce que le discriminateur de code est connecté aux moyens de génération de la réplique ponctuelle et aux moyens de génération de la réplique en avance, et dans lequel le discriminateur de code est propre à déterminer le déphasage à partir de la réplique en avance et d'une fonction de la réplique ponctuelle.

Suivant des modes particuliers de réalisation, le récepteur comporte l'une ou plusieurs des caractéristiques suivantes, prises isolément ou en combinaison :

- les moyens de génération de la réplique en avance sont propres à décaler la réplique ponctuelle en avance d'une durée prédéfinie et dans lequel la fonction de la réplique ponctuelle varie en fonction de la dite durée prédéfinie pondérée par un facteur prédéfini ;

- les moyens de décalage comprennent des moyens de génération d'une réplique en retard propres à décaler la réplique ponctuelle de la même durée prédéfinie, et dans lequel le discriminateur de code est connecté aux moyens de génération de la réplique en retard, la fonction de la réplique ponctuelle variant en fonction de la réplique en avance et de la réplique en retard ;

- le code comprend une composante en phase et une composante en quadrature de phase, le discriminateur de code est propre à déterminer le déphasage à partir de la relation suivante :

$$D = (I_E^2 + Q_E^2) - (I_F^2 + Q_F^2)$$

dans laquelle :

. D est la sortie du discriminateur de la boucle de code;
. $I_E$ est une fonction de corrélation entre la réplique en avance et la composante en phase du signal reçu démodulé de sa porteuse ;
. $Q_E$ est une fonction de corrélation entre la réplique en avance et la composante en quadrature de phase du signal reçu démodulé de sa porteuse ;
. $I_F$ et $Q_F$ sont les composantes en phase et en quadrature de phase de la fonction de la réplique ponctuelle ; avec

$$\begin{cases} I_F = I_P - \dfrac{\Delta}{2} \dfrac{I_E + I_L}{2 - \Delta} \\ Q_F = Q_P - \dfrac{\Delta}{2} \dfrac{Q_E + Q_L}{2 - \Delta} \end{cases}$$

dans laquelle :
. $\Delta/2$ est la durée de la plage temporelle définie entre la réplique ponctuelle et l'une ou l'autre de la réplique en avance et de la réplique en retard ;
. $I_P$ est une fonction de corrélation entre la réplique ponctuelle et la composante en phase du signal reçu démodulé de sa porteuse ;
. $Q_P$ est une fonction de corrélation entre la réplique ponctuelle et la composante en quadrature de phase du signal reçu démodulé de sa porteuse;
. $I_L$ est une fonction de corrélation entre la réplique en retard et la composante en phase du signal reçu démodulé de sa porteuse; et
. $Q_L$ est une fonction de corrélation entre la réplique en retard et la composante en quadrature de phase du signal reçu démodulé de sa porteuse.
- le code comprend une composante en phase et une composante en quadrature de phase, le discriminateur de code est propre à déterminer le déphasage à partir de la relation suivante :

$$D = (I_E^2 + Q_E^2) - (I_F^2 + Q_F^2)$$

dans laquelle :
. D est la sortie le discriminateur de la boucle de code ;
. $I_E$ est une fonction de corrélation entre la réplique en avance et la composante en phase du signal reçu démodulé de sa porteuse ;
. $Q_E$ est une fonction de corrélation entre la réplique en avance et la composante en quadrature de phase du signal reçu démodulé de sa porteuse;
. $I_F$ et $Q_F$ sont les composantes en phase et en quadrature de phase de la fonction de la réplique ponctuelle ; avec

$$\begin{cases} I_F = I_P - \dfrac{\Delta}{2} \displaystyle\sum_{0 \leq k \leq N} A_k \cos(\theta_k - \hat{\theta}) \\ Q_F = Q_P - \dfrac{\Delta}{2} \displaystyle\sum_{0 \leq k \leq N} A_k \sin(\theta_k - \hat{\theta}) \end{cases} \quad (2)$$

dans laquelle :

. $I_P$ est une fonction de corrélation entre la réplique ponctuelle et la composante en phase du signal reçu démodulé de sa porteuse ;

. $Q_P$ est une fonction de corrélation entre la réplique ponctuelle et la composante en quadrature de phase du signal reçu démodulé de sa porteuse ;

. $\Delta/2$ est la durée de la plage temporelle définie entre la réplique ponctuelle et l'une ou l'autre de la réplique en avance et de la réplique en retard ;

. $A_0$ est l'amplitude du trajet direct ;

. $A_k$ est l'amplitude du $k^{\text{ième}}$ trajet multiple réceptionné par le récepteur ;

. $\theta_0$ est la phase du trajet direct

. $\theta_k$ est la phase du $k^{\text{ième}}$ trajet multiple réceptionné par le récepteur ;

. $\hat{\theta}$ est la phase du générateur de la porteuse locale du signal électromagnétique lorsque la boucle de la porteuse est à l'équilibre ;

. $N$ est le nombre de trajets multiples réceptionnés par le récepteur.

L'invention a également pour objet un système de détermination d'au moins une information de positionnement d'un récepteur, le système comportant au moins un générateur d'un signal appelé code, caractérisé en ce que le système comporte en outre un récepteur tel que décrit ci-dessus.

Enfin, l'invention a également pour objet un procédé de détermination d'au moins une information de positionnement d'un récepteur appartenant à un système comportant au moins un générateur d'un signal appelé code, le procédé comportant les étapes suivantes réalisées par le récepteur :

- réception du code généré par le générateur ;
- génération d'un signal identique au code, appelé réplique ponctuelle ;
- décalage temporel de la réplique ponctuelle pour générer au moins une réplique en avance ;
- détermination d'un déphasage entre la réplique ponctuelle et le code réceptionné ;
- détermination de l'information de positionnement du récepteur à partir de du déphasage déterminé ;

caractérisé en ce que le déphasage est déterminé à partir de la réplique en avance et d'une fonction de la réplique ponctuelle.

L'invention sera mieux comprise à la lecture de la description qui va suivre, donnée uniquement à titre indicatif et faite en se référant aux dessins annexés, sur lesquels :

- la figure 1 est une vue schématique d'un système de détermination selon l'invention lorsque le récepteur est positionné près d'une surface de réflexion ;
- la figure 2 est une courbe représentant le signal de sortie d'un discriminateur en fonction du décalage entre la réplique ponctuelle et le code réceptionné d'un récepteur GPS standard sans influence de trajets multiples (lorsque seul le signal direct est présent) ;
- la figure 3 est une courbe représentant le signal de sortie d'un discriminateur en fonction du décalage entre la réplique ponctuelle et le code réceptionné d'un récepteur GPS standard en présence de trajets multiples ;
- la figure 4 est une vue schématique du récepteur selon l'invention ; et
- la figure 5 est une courbe représentant le signal de sortie d'un discriminateur en fonction du décalage entre la réplique ponctuelle et le code réceptionné d'un récepteur selon l'invention en présence de trajets multiples.

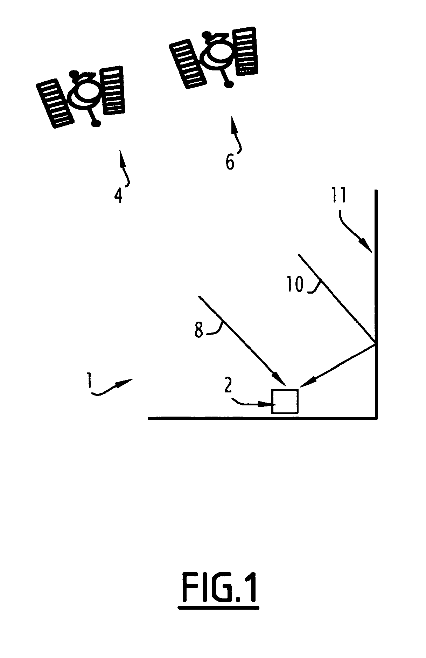

Le système 1 de détermination d'au moins une information de positionnement d'un récepteur 2 est illustré sur la figure 1. Il comprend des satellites 4, 6 appartenant au système global de navigation par satellite (GPS ou GNSS), ainsi que le récepteur 2.

Chaque satellite 4, 6 est par exemple propre à transmettre un signal électromagnétique constitué par un signal de code C/A, appelé code, de période égale à 1 milliseconde et généré avec une fréquence égale à 1,023 MHz modulant une porteuse de fréquence égale à 1575,42 MHz. Le code est alors constitué de 1023 bribes.

Une bribe est égale à 1/1023 ms et est généralement désignée par le terme anglais « chip ». Pour des raisons de simplification, deux satellites ont été représentés sur la figure 1. Néanmoins, pour définir la position du récepteur à 3 dimensions, il est nécessaire d'avoir 3+1 satellites. En effet, il existe quatre inconnues: x, y et z, les coordonnées spatiales du récepteur, ainsi que le biais d'horloge du récepteur par rapport au temps GPS. Quatre satellites sont nécessaires pour résoudre un système à quatre équations et quatre inconnues.

Dans la suite de la description, seul le traitement d'un signal provenant du satellite 4 a été décrit, le traitement des signaux provenant des autres satellites étant identique.

Dans l'exemple de réalisation de l'invention illustré sur la figure 1, le récepteur 2 est apte à réceptionner un signal électromagnétique 8 en visibilité directe, c'est-à-dire un signal effectuant le trajet en ligne directe du satellite 4 au récepteur 2, et un signal électromagnétique 10 provenant du satellite 4 et réfléchi par une surface 11.

En vérité, le récepteur 2 réceptionne généralement plusieurs signaux réfléchis lorsqu'il est situé dans un environnement comprenant de nombreuses surfaces réfléchissantes.

De façon classique, le récepteur 2 est propre à démoduler les signaux électromagnétiques transmis par le satellite 4 et à calculer la distance séparant le récepteur 2 du satellite 4 par mesure du retard entre un code C/A généré localement par le récepteur 2 et le code C/A du signal provenant du satellite 4. Ce retard est ensuite multiplié par la célérité du signal pour obtenir la distance recherchée. Le code généré localement par le récepteur 2 est identique à celui provenant du satellite 4. Il est appelé réplique ponctuelle.

En pratique, ce retard est obtenu par alignement de la réplique au code C/A réceptionné à l'aide d'une boucle de code.

En l'absence de trajets multiples, lorsque la boucle de code d'un récepteur de l'état de la technique n'est pas à l'équilibre, le signal 8 de sortie du discriminateur présente une amplitude non nulle lorsque la réplique ponctuelle n'est pas synchronisée avec le code réceptionné. Puis, la boucle de code asservit la réplique ponctuelle au code réceptionné. A cet effet, la réplique ponctuelle est décalée graduellement pour se synchroniser avec le code réceptionné.

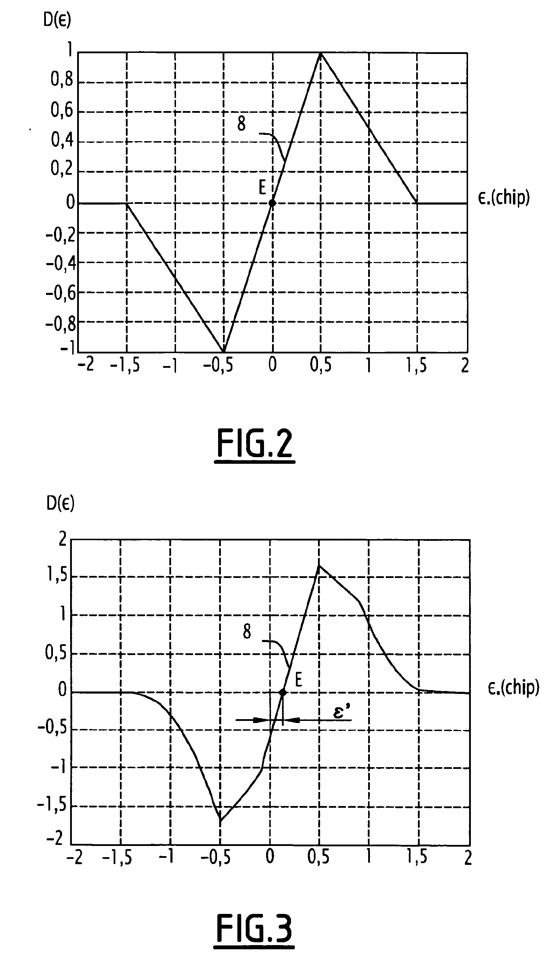

Lorsque la boucle de code du récepteur de l'état de la technique est à l'équilibre, la réplique ponctuelle est en phase avec le code réceptionné. Dans ce cas, comme visible sur la figure 2, le signal 8 de sortie du discriminateur de code passe par un point d'équilibre E d'amplitude nulle au temps t =0. En effet, après quelques itérations de la boucle, celle-ci atteint son état d'équilibre (environ après une centaine de ms).

Toutefois, comme visible sur la figure 3, la présence de trajets multiples entraîne le déplacement du point d'équilibre E de la boucle de code de sorte que le signal de sortie 8 du discriminateur de code présente une amplitude nulle au temps t = ε'. A l'équilibre de la boucle, la réplique ponctuelle n'est pas synchronisée avec le code du signal en visibilité directe.

La donnée $\varepsilon$ est appelée erreur de synchronisation.

Dans l'exemple illustré sur la figure 3, l'erreur de synchronisation ε' est positive.

La présence de trajets multiples distord le signal 8 de sortie du discriminateur de code. Ainsi, la condition selon laquelle le signal 8 de sortie du discriminateur de code passe par zéro pour une erreur de synchronisation nulle ($\varepsilon$ = 0) lorsque la réplique est synchronisée au code C/A n'est plus vraie.

Pour synchroniser la réplique au code du signal en visibilité directe malgré l'existence de signaux réfléchis, la présente invention propose que le discriminateur de code calcule la fonction suivante :

$$D = \left(I_E{}^2 + Q_E{}^2\right) - \left((I_F)^2 + (Q_F)^2\right) \quad (1)$$

dans laquelle :

- $I_E$ est une fonction de corrélation entre la réplique en avance et la composante en phase du code reçu;
- $Q_E$ est une fonction de corrélation entre la réplique en avance et la composante en quadrature de phase du code reçu ;
- $I_F$ et $Q_F$ sont les composantes en phase et en quadrature de phase de la fonction de la réplique ponctuelle.

Les composantes $I_F$ et $Q_F$ sont calculées à partir des relations suivantes :

$$\begin{cases} I_F = I_P - \dfrac{\Delta}{2} \sum_{0 \le k \le N} A_k \cos(\theta_k - \hat{\theta}) \\ Q_F = Q_P - \dfrac{\Delta}{2} \sum_{0 \le k \le N} A_k \sin(\theta_k - \hat{\theta}) \end{cases} \quad (2)$$

dans laquelle :

- $I_P$ est une fonction de corrélation entre la réplique ponctuelle et la composante en phase du code reçu ;
- $Q_P$ est une fonction de corrélation entre la réplique ponctuelle et la composante en quadrature de phase du code reçu ;
- $\Delta/2$ est la durée de la plage temporelle définie entre la réplique ponctuelle et l'une ou l'autre de la réplique en avance et de la réplique en retard ;
- $A_0$ est l'amplitude du trajet direct ;
- $A_k$ est l'amplitude du $k^{ième}$ trajet multiple réceptionné par le récepteur ;
- $\theta_0$ est la phase du trajet direct ;
- $\theta_k$ est la phase du $k^{ième}$ trajet réceptionné par le récepteur ;
- $\hat{\theta}$ est la phase de la porteuse locale lorsque la boucle de la porteuse est à l'équilibre ;
- N est le nombre de trajets multiples réceptionnés par le récepteur.

Selon un autre mode de réalisation de l'invention, les composantes $I_F$ et $Q_F$ peuvent s'exprimer de la façon suivante :

$$\begin{cases} I_F = I_P - \dfrac{\Delta}{2}\dfrac{I_E + I_L}{2-\Delta} \\ Q_F = Q_P - \dfrac{\Delta}{2}\dfrac{Q_E + Q_L}{2-\Delta} \end{cases} (3)$$

dans laquelle :

- $I_L$ est une fonction de corrélation entre la réplique en retard et la composante en phase du code reçu ; et
- $Q_L$ est une fonction de corrélation entre la réplique en retard et la composante en quadrature de phase du code reçu
- $\Delta/2$ est la durée de la plage temporelle définie entre la réplique ponctuelle et la réplique en retard, $\Delta/2$ étant exprimé en chip.

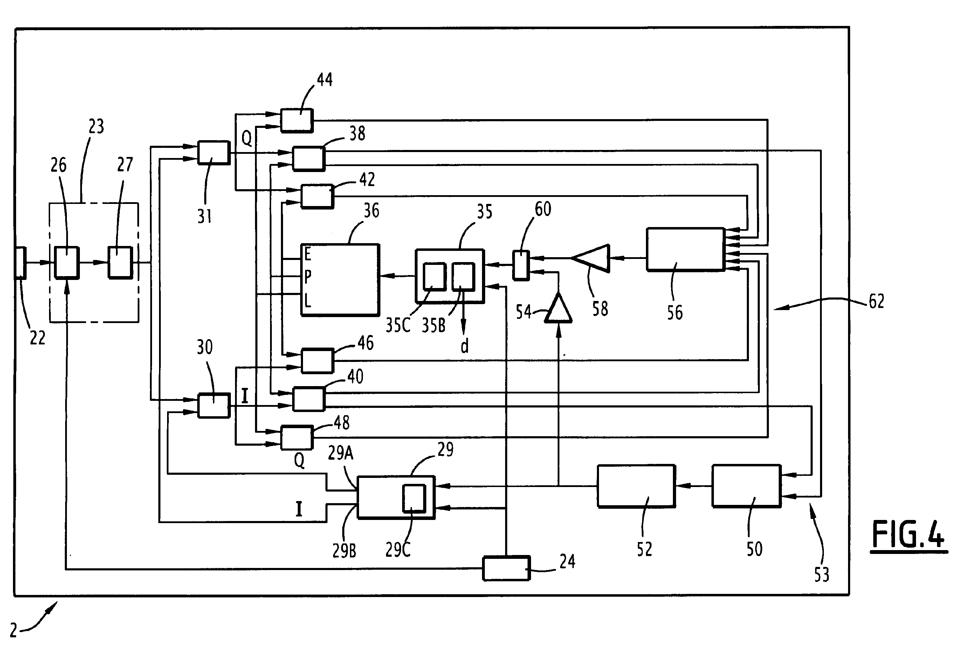

A cet effet, le récepteur 2 selon l'invention comporte des moyens de réception 22, une horloge 24 et des moyens 23 de prétraitement du signal RF réceptionné, comme visible sur la figure 4.

Les moyens de réception 22 sont aptes à réceptionner les signaux générés par le satellite 4.

Les moyens de prétraitement 23 comportent un convertisseur-abaisseur RF-IF 26 connecté aux moyens de réception 22 et à l'horloge 24, et un convertisseur analogique-numérique 27 relié au convertisseur-abaisseur 26.

Le convertisseur-abaisseur 26 est apte à convertir la fréquence de la porteuse du signal réceptionné par le récepteur 2 d'une fréquence radio à une fréquence intermédiaire.

Le récepteur 2 est propre à démoduler la porteuse du signal réceptionné et à synchroniser un code C/A généré localement au code C/A du signal réceptionné pour déterminer le temps de propagation du signal.

A cet effet, le récepteur 2 comprend une boucle de porteuse 53 permettant de démoduler le signal et de déterminer le temps de propagation par mesure du déphasage entre la porteuse générée localement et la porteuse du signal électromagnétique provenant du satellite 4, et une boucle de code 62 permettant mesurer plus facilement ce temps de propagation par mesure du déphasage entre le code généré localement et le code C/A du signal électromagnétique provenant du satellite.

Ainsi, le récepteur 2 comprend en outre un générateur 29 relié à l'horloge 24 ainsi qu'un premier 30 et un deuxième 31 mélangeurs reliés au générateur 29 et au convertisseur 27.

Le générateur 29 génère sur une sortie 29A une composante en quadrature de phase Q (cosinus) et sur une sortie 29B une composante en phase I (sinus) d'un signal qui est une réplique à la fréquence intermédiaire du signal émis par le satellite.

Le générateur 29 comporte des moyens 29C d'ajustement de la phase de du signal qu'il génère.

Les mélangeurs 30 et 31 sont propres à démoduler le signal réceptionné. Ils génèrent en sortie une composante en quadrature de phase Q (cosinus) et une composante en phase I (sinus) du signal modulant le signal RF produit par le satellite, c'est-à-dire dans l'exemple décrit du code C/A.

Le récepteur 2 comprend un générateur 35 relié à l'horloge 24, et un registre de décalage temporel 36 relié en entrée au générateur 35.

Le générateur 35 est propre à générer un signal identique au signal modulant la porteuse du signal RF produit par le satellite. Ce signal modulant est généralement appelé réplique. Dans l'exemple de l'invention décrit, la réplique est un code C/A, c'est-à-dire un signal binaire de période égale à 1023 bribes et de fréquence égale à 1,023 MHz.

Le générateur 35 comporte des moyens de calcul 35B de la distance d entre le récepteur 2 et le satellite 4 à partir du déphasage entre le signal réceptionné et le signal généré par le récepteur 2, et des moyens 35C d'ajustement de la phase de la réplique ponctuelle à partir dudit même déphasage.

Le registre 36 est apte à décaler la sortie du générateur de code 35 pour générer une réplique en avance, une réplique ponctuelle et une réplique en retard.

Le registre 36 est propre à transmettre la réplique sans retard ou ni avance par une sortie P, la réplique en avance de la durée Δ/2 par une sortie E, la réplique en retard de la durée Δ/2 par une sortie L.

La durée de la plage temporelle Δ est réglable. Elle est par exemple égale à 1 bribe.

Le récepteur 2 comporte un corrélateur 38 connecté à la sortie du mélangeur 31 et à la sortie P du registre 36, et un corrélateur 40 relié à la sortie du mélangeur 30 et à la sortie P du registre 36.

Ces corrélateurs 38, 40 sont aptes à réaliser une fonction de corrélation entre la réplique ponctuelle et les composantes Q et I du signal réceptionné et démodulé de sa porteuse.

Le récepteur 2 comprend en outre un discriminateur de porteuse 50 relié à la sortie des corrélateurs 38 et 40, et un filtre 52 connecté en entrée à la sortie du discriminateur de code 50 et en sortie aux moyens d'ajustement 29C du générateur.

Le discriminateur de porteuse 50 est apte à déterminer la différence de phase entre la phase de la porteuse locale et la phase du signal reçu en utilisant les signaux sortant des corrélateurs 38 et 40.

Le discriminateur de porteuse 50 est apte à fournir ce déphasage aux moyens d'ajustement 29C afin d'asservir temporellement la phase de la porteuse locale à la phase de chaque séquence du signal réceptionnée dans une première plage de capture. Cette première plage de capture est comprise entre $-\pi/2$ et $+\pi/2$.

Le filtre 52 est apte à filtrer le déphasage pour minimiser l'effet du bruit thermique sur la phase et transformer la phase en fréquence qui pilote les moyens d'ajustement 29C.

Le générateur 29, les moyens d'ajustement 29C, les mélangeurs 30, 31, les corrélateurs 38, 40, le discriminateur de porteuse 50 et le filtre 52 forment une boucle d'asservissement 53 de la phase de la porteuse générée localement à la porteuse du signal produit par le satellite.

Cette boucle d'asservissement 53 permet de synchroniser la phase du signal produit par le générateur 29 à la phase de la porteuse du signal produit par le satellite. Elle est appelée la boucle de porteuse.

Le récepteur 2 comporte en outre deux corrélateurs 42, 44 connectés à la sortie du mélangeur 31 et aux sorties E et L du registre 36, et deux corrélateurs 46, 48 reliés à la sortie du mélangeur 30 et aux sorties E et L du registre 36.

Les corrélateurs 42, 46 sont aptes à réaliser une fonction de corrélation entre la réplique en avance et les composantes Q et I du signal démodulé de sa porteuse.

Les corrélateurs 44, 48 sont aptes à réaliser une fonction de corrélation entre la réplique en retard et les composantes Q et I du signal démodulé.

Le récepteur 2 comprend en outre un discriminateur de code 56 relié en entrée à l'ensemble des corrélateurs 38, 40, 42, 44, 46 et 48, un amplificateur 58 connecté au discriminateur de code 56, et un sommateur 60 relié en entrée à l'amplificateur 58 et en sortie aux moyens d'ajustement 35C du générateur 35.

Le discriminateur de code 56 est propre à rechercher le déphasage entre la réplique ponctuelle et le code du signal direct, dans une deuxième plage de capture plus large que la première plage de capture. Ce déphasage est généralement exprimé en décalage spatial ou temporel. Dans ce dernier cas, il est appelé retard. Une durée de 1 chip correspondant à environ 293 mètres. La deuxième plage de capture présente une durée comprise entre -0,5 chip et 0,5 chip.

Pour que la boucle de code 62 se synchronise avec le code du signal en visibilité directe et non avec le code des signaux réfléchis, le discriminateur de code 56 selon l'invention est propre à calculer la relation (3).

Le discriminateur de code 56 est apte à fournir son signal de sortie aux moyens d'ajustement 35C afin d'asservir la réplique au code C/A du signal en visibilité directe.

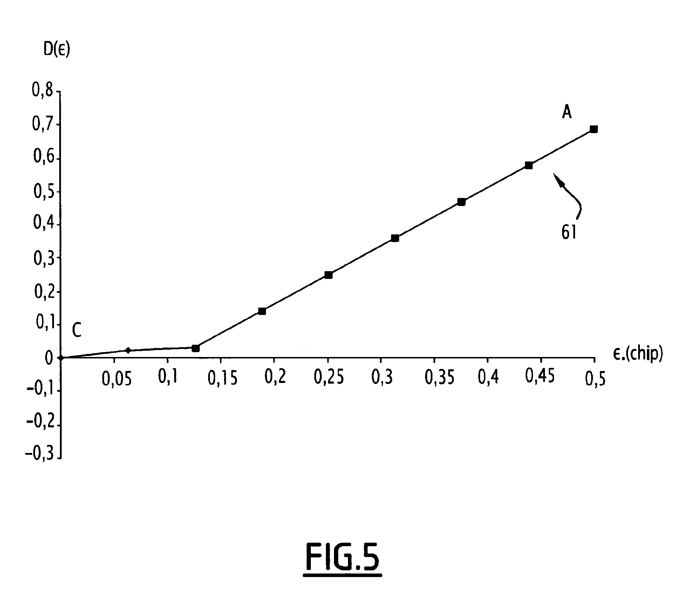

Au début de la poursuite de la phase du code, le signal 61 de sortie D du discriminateur de code 56 présente une valeur positive ou négative. Dans l'exemple de réalisation illustré sur la figure 5, le signal 61 de sortie du discriminateur de code 56 est supérieur à zéro (point A). Les moyens d'ajustement 35C sont alors aptes à décaler temporellement et graduellement la réplique ponctuelle pour minimiser l'erreur de synchronisation $\varepsilon$.

Lorsque la réplique ponctuelle est synchronisée au code C/A du signal en visibilité directe, le signal 61 de sortie du discriminateur est nul (point C) pour un décalage nul entre la réplique ponctuelle et le code réceptionné. Dans ce cas, la boucle de code 62 est en état d'équilibre.

Lorsque le signal de sortie du discriminateur est inférieur à 0, la réplique est retardée et le comportement de la boucle est similaire à celui d'une boucle à verrouillage de retard standard.

Le gain de l'amplificateur 58 est environ égal à à Bn/0,25. Bn est la largeur de bande de la boucle de code et est généralement inférieure à 5 Hz.

Le récepteur 2 comprend en outre un amplificateur 54 relié en entrée au filtre 52 et en sortie au sommateur 60.

L'amplificateur 54 présente un gain égal à 1/1540, c'est-à-dire un gain correspondant au rapport entre la fréquence de la porteuse et la fréquence de génération du code.

Le sommateur 60 est propre à sommer le déphasage du code déterminé par le discriminateur de code 56 au déphasage de la porteuse déterminé par le discriminateur de porteuse 50, ce dernier déphasage étant pondéré par le gain de l'amplificateur 54.

Les moyens d'ajustement 35C sont propres à ajuster la phase de la réplique ponctuelle à l'aide du déphasage provenant du sommateur 60, c'est-à-dire du déphasage du code additionné au déphasage pondéré de la porteuse.

Le générateur 35, les moyens d'ajustement 35C, le registre 36, les corrélateurs 42, 44, 46 et 48, le discriminateur de code 56, l'amplificateur 58 et le sommateur 60 forment une nouvelle boucle d'asservissement 62.

Cette boucle d'asservissement 62 est une boucle à verrouillage de retard (DLL). Elle est utilisée pour synchroniser la phase de la réplique du code C/A à la phase du code reçu au cours d'une étape de poursuite (en anglais « tracking ») du signal généré par le satellite. Cette synchronisation est plus robuste que la synchronisation réalisée par la boucle de la porteuse. Elle est appelée boucle du code.

Les moyens de calcul 35B sont aptes à déterminer la distance entre le récepteur 2 et le satellite 4 à partir du déphasage provenant du sommateur 60.

Des moyens non représentés sont aptes à calculer la position du récepteur 2 en fonction des distances entre le récepteur 2 et les autres satellites.

Avantageusement, le récepteur selon l'invention permet de déterminer le déphasage entre la réplique ponctuelle et le code C/A du signal électromagnétique en visibilité directe, et ainsi de déterminer la position exacte du récepteur malgré la réception de signaux réfléchis parasites.

## Revendications

1. Récepteur (2) d'un système (1) de détermination d'au moins une information de positionnement dudit récepteur (2), le système (1) comprenant au moins un générateur (4, 6) d'un signal appelé code, le code comprenant une composante en phase et une composante en quadrature, le récepteur (2) comprenant :

   - des moyens (22) de réception du code ;
   - des moyens (35, 35C) de génération d'un signal identique au code, appelé réplique ponctuelle ;
   - des moyens (36) de décalage temporel de la réplique ponctuelle comprenant des moyens (E) de génération d'une réplique en avance ;
   - un discriminateur de code (56), propre à déterminer le déphasage entre la réplique ponctuelle et le code réceptionné et connecté aux moyens (35, 35C) de génération de la réplique ponctuelle et aux moyens (E) de génération de la réplique en avance ;
   - des moyens (35C) de détermination de l'information de positionnement du récepteur (2) à partir du déphasage déterminé ;
   **caractérisé en ce que** le discriminateur de code (56) est propre à déterminer le déphasage à partir de la relation suivante :

$$D = (I_E{}^2 + Q_E{}^2) - (I_F{}^2 + Q_F{}^2)$$

   dans laquelle :
   - D est la sortie du discriminateur de la boucle de code;
   - $I_E$ est une fonction de corrélation entre la réplique en avance et la composante en phase du signal reçu démodulé de sa porteuse;
   - $Q_E$ est une fonction de corrélation entre la réplique en avance et la composante en quadrature de phase du signal reçu démodulé de sa porteuse;
   - $I_F$ et $Q_F$ sont les composantes en phase et en quadrature de phase de la fonction de la réplique ponctuelle avec

$$I_F = I_P - C_{IF}$$
$$Q_F = Q_P - C_{QF}$$

dans laquelle :

- $I_P$ est une fonction de corrélation entre la réplique ponctuelle et la composante en phase du signal reçu démodulé de sa porteuse ;
- $Q_P$ est une fonction de corrélation entre la réplique ponctuelle et la composante en quadrature de phase du signal reçu démodulé de sa porteuse;
- $C_{IF}$ et $C_{QF}$ sont des composantes en phase et en quadrature de phase d'une fonction indépendante de la réplique ponctuelle.

2. Récepteur (2) selon la revendication 1, dans lequel les moyens (E) de génération de la réplique en avance sont propres à décaler la réplique ponctuelle en avance d'une durée prédéfinie ($\Delta/2$) et dans lequel la fonction de la réplique ponctuelle varie en fonction de la dite durée prédéfinie ($\Delta/2$) pondérée par un facteur prédéfini.

3. Récepteur (2) selon l'une quelconque des revendications 1 et 2, dans lequel les moyens de décalage (36) comprennent des moyens (L) de génération d'une réplique en retard propres à décaler la réplique ponctuelle de la même durée prédéfinie ($\Delta/2$), et dans lequel le discriminateur de code (56) est connecté aux moyens (L) de génération de la réplique en retard, la fonction de la réplique ponctuelle variant en fonction de la réplique en avance et de la réplique en retard.

4. Récepteur (2) selon l'une quelconque des revendications 1 à 3, dans lequel

- les composantes en phase et en quadrature de phase $I_F$ et $Q_F$ de la fonction de la réplique ponctuelle vérifient la relation suivante :

$$\begin{cases} I_F = I_P - \dfrac{\Delta}{2}\,\dfrac{I_E + I_L}{2 - \Delta} \\[2mm] Q_F = Q_P - \dfrac{\Delta}{2}\,\dfrac{Q_E + Q_L}{2 - \Delta} \end{cases}$$

dans laquelle :

- $\Delta/2$ est la durée de la plage temporelle définie entre la réplique ponctuelle et l'une ou l'autre de la réplique en avance et de la réplique en retard ;
- $I_L$ est une fonction de corrélation entre la réplique en retard et la composante en phase du signal reçu démodulé de sa porteuse; et
- $Q_L$ est une fonction de corrélation entre la réplique en retard et la composante en quadrature de phase du signal reçu démodulé de sa porteuse.

5. Récepteur (2) selon l'une quelconque des revendications 1 à 3, dans lequel les composantes en phase et en quadrature de phase $I_F$ et $Q_F$ de la fonction de la réplique ponctuelle ; avec

$$\begin{cases} I_F = I_P - \dfrac{\Delta}{2} \displaystyle\sum_{0 \le k \le N} A_k \cos(\theta_k - \hat{\theta}) \\[2mm] Q_F = Q_P - \dfrac{\Delta}{2} \displaystyle\sum_{0 \le k \le N} A_k \sin(\theta_k - \hat{\theta}) \end{cases} \qquad (2)$$

dans laquelle :

- $\Delta/2$ est la durée de la plage temporelle définie entre la réplique ponctuelle et l'une ou l'autre de la réplique en avance et de la réplique en retard ;
- $A_0$ est l'amplitude du trajet direct ;
- $A_k$ est l'amplitude du $k^{\text{ième}}$ trajet multiple réceptionné par le récepteur ;
- $\theta_0$ est la phase du trajet direct
- $\theta_k$ est la phase du $k^{\text{ième}}$ trajet multiple réceptionné par le récepteur ;

- $\hat{\theta}$ est la phase du générateur de la porteuse locale du signal électromagnétique lorsque la boucle de la porteuse est à l'équilibre ;
- N est le nombre de trajets multiples réceptionnés par le récepteur.

**6.** Système (1) de détermination d'au moins une information de positionnement d'un récepteur (2), le système (1) comportant au moins un générateur (4, 6) d'un signal appelé code, **caractérisé en ce que** le système (1) comporte en outre un récepteur (2) selon l'une quelconque des revendications 1 à 5.

**7.** Procédé de détermination d'au moins une information de positionnement d'un récepteur (2) appartenant à un système (1) comportant au moins un générateur (4, 6) d'un signal appelé code, le procédé comportant les étapes suivantes réalisées par le récepteur (2) :

- réception du code généré par le générateur (2) ;
- génération d'un signal identique au code, appelé réplique ponctuelle ;
- décalage temporel de la réplique ponctuelle pour générer au moins une réplique en avance ;
- détermination d'un déphasage entre la réplique ponctuelle et le code réceptionné ;
- détermination de l'information de positionnement du récepteur à partir de du déphasage déterminé ;
- **caractérisé en ce que** le déphasage est déterminé à partir de la relation suivante :

$$D = (I_E^2 + Q_E^2) - (I_F^2 + Q_F^2)$$

dans laquelle :
- D est la sortie du discriminateur de la boucle de code;
- $I_E$ est une fonction de corrélation entre la réplique en avance et la composante en phase du signal reçu démodulé de sa porteuse;
- $Q_E$ est une fonction de corrélation entre la réplique en avance et la composante en quadrature de phase du signal reçu démodulé de sa porteuse;
- $I_F$ et $Q_F$ sont les composantes en phase et en quadrature de phase de la fonction de la réplique ponctuelle avec

$$I_F = I_P - C_{IF}$$
$$Q_F = Q_P - C_{QF} ;$$

dans laquelle :
- $I_P$ est une fonction de corrélation entre la réplique ponctuelle et la composante en phase du signal reçu démodulé de sa porteuse ;
- $Q_P$ est une fonction de corrélation entre la réplique ponctuelle et la composante en quadrature de phase du signal reçu démodulé de sa porteuse;
- $C_{IF}$ et $C_{QF}$ sont des composantes en phase et en quadrature de phase d'une fonction indépendante de la réplique ponctuelle.

**Claims**

**1.** Receiver (2) of a system (1) for determining at least one piece of information about the positioning of said receiver (2), the system (1) comprising at least one generator (4, 6) of a signal known as the code, the code comprising an in-phase component and a quadrature component, the receiver (2) comprising:

- means (22) for receiving the code;
- means (35, 35C) for generating a signal identical to the code, known as the prompt replica;
- means (36) for time shifting the prompt replica comprising means (E) for generating an early replica;
- a code discriminator (56) configured to determine the phase shift between the prompt replica and the received code and connected to the means (35, 35C) for generating the prompt replica and to the means (E) for generating the early replica;

- means (35C) for determining information about the positioning of the receiver (2) on the basis of the determined phase shift;
**characterised in that** the code discriminator (56) is configured to determine the phase shift on the basis of the following equation:

$$D = (I_E{}^2 + Q_E{}^2) - (I_F{}^2 + Q_F{}^2)$$

in which:
- D is the discriminator output of the code loop;
- $I_E$ is a correlation function between the early replica and the in-phase component of the received signal demodulated from its carrier;
- $Q_E$ is a correlation function between the early replica and the quadrature component of the received signal demodulated from its carrier;
- $I_F$ and $Q_F$ are the in-phase and quadrature components of the prompt replica function
where

$$I_F = I_P - C_{IF}$$
$$Q_F = Q_P - C_{QF} \quad ;$$

in which:
- $I_P$ is a correlation function between the prompt replica and the in-phase component of the received signal demodulated from its carrier;
- $Q_P$ is a correlation function between the prompt replica and the quadrature component of the received signal demodulated from its carrier;
- $C_{IF}$ and $C_{QF}$ are in-phase and quadrature components of an independent function of the prompt replica.

2. Receiver (2) as claimed in claim 1, in which the means (E) for generating the early replica are configured to shift the prompt replica forward by a predefined time ($\Delta/2$) and in which the prompt replica function varies as a function of said predefined time ($\Delta/2$) weighted by a predefined factor.

3. Receiver (2) as claimed in any one of claims 1 and 2, in which the shifting means (36) comprises means (L) for generating a late replica configured to shift the prompt replica by the same predefined time ($\Delta/2$) and in which the code discriminator (56) is connected to the means (L) for generating the late replica, the prompt replica function varying as a function of the early replica and the late replica.

4. Receiver (2) as claimed in any one of claims 1 to 3, in which

- the in-phase and quadrature components $I_F$ and $Q_F$ of the prompt replica function verify the following equation:

$$\begin{cases} I_F = I_P - \dfrac{\Delta}{2}\dfrac{I_E + I_L}{2 - \Delta} \\ Q_F = Q_P - \dfrac{\Delta}{2}\dfrac{Q_E + Q_L}{2 - \Delta} \end{cases}$$

in which:
- $\Delta/2$ is the duration of the temporal range defined between the prompt replica and one or other of the early replica and late replica;
- $I_L$ is a correlation function between the late replica and the in-phase component of the received signal demodulated from its carrier; and
- $Q_L$ is a correlation function between the late replica and the quadrature component of the received signal demodulated from its carrier.

5. Receiver (2) as claimed in any one of claims 1 to 3, in which

the in-phase and quadrature components $I_F$ and $Q_F$ of the prompt replica function:
with

$$\begin{cases} I_F = I_P - \dfrac{\Delta}{2} \sum_{0 \leq k \leq N} A_k \cos(\theta_k - \hat{\theta}) \\ Q_F = Q_P - \dfrac{\Delta}{2} \sum_{0 \leq k \leq N} A_k \sin(\theta_k - \hat{\theta}) \end{cases} \qquad (2)$$

in which:

- $\Delta/2$ is the duration of the temporal range defined between the prompt replica and one or other of the early replica and late replica;
- $A_0$ is the amplitude of the direct path;
$A_k$ is the amplitude of the $k^{th}$ multiple path received by the receiver;
$\theta_0$ is the phase of the direct path;
$\theta_k$ is the phase of the $k^{th}$ multiple path received by the receiver;
$\hat{\theta}$ is the phase of the local carrier generator of the electromagnetic signal when the loop of the carrier is in equilibrium;
- N is the number of multiple paths received by the receiver.

6. System (1) for determining at least one piece of information about the positioning of a receiver (2), the system (1) comprising at least one generator (4, 6) of a signal known as the code, **characterised in that** the system (1) further comprises a receiver (2) as claimed in any one of claims 1 to 5.

7. Method of determining at least one piece of information about the positioning of a receiver (2) belonging to a system (1) comprising at least one generator (4, 6) of a signal known as the code, the method comprising the following steps run by the receiver (2):

- receiving the code generated by the generator (2);
- generating a signal identical to the code, known as the prompt replica;
- time shifting the prompt replica to generate at least one early replica;
- determining a phase shift between the prompt replica and the received code;
- determining information about the positioning of the receiver on the basis of the determined phase shift;
**characterised in that** the phase shift is determined by the following equation:

$$D = (I_E^2 + Q_E^2) - (I_F^2 + Q_F^2)$$

in which:
- D is the discriminator output of the code loop;
- $I_E$ is a correlation function between the early replica and the in-phase component of the received signal demodulated from its carrier;
- $Q_E$ is a correlation function between the early replica and the quadrature component of the received signal demodulated from its carrier;
- $I_F$ and $Q_F$ are the in-phase and quadrature components of the prompt replica function
where

$$\begin{aligned} I_F &= I_P - C_{IF} \\ Q_F &= Q_P - C_{QF} \end{aligned} \quad ;$$

in which:
- $I_P$ is a correlation function between the prompt replica and the in-phase component of the received signal demodulated from its carrier;
- $Q_P$ is a correlation function between the prompt replica and the quadrature component of the received signal demodulated from its carrier;

- $C_{IF}$ and $C_{QF}$ are in-phase and quadrature components of an independent function of the prompt replica.

**Patentansprüche**

1. Empfänger (2) eines Systems (1) zur Bestimmung von mindestens einer Positionierungsinformation des Empfängers (2), wobei das System (1) mindestens einen Generator (4, 6) eines Signals umfasst, das Code genannt wird, wobei der Code eine Inphasenkomponente und eine Quadraturkomponente umfasst, wobei der Empfänger (2) Folgendes umfasst:

   - Mittel (22) zum Empfangen des Codes;
   - Mittel (35, 35C) zur Generierung eines Signals, das identisch mit dem Code ist und das rechtzeitige Antwort genannt wird;
   - Mittel (36) zur zeitlichen Verschiebung der rechtzeitigen Antwort, die Mittel (E) zur Generierung einer Vorausantwort umfassen;
   - einen Codediskriminator (56), der geeignet ist, um die Phasenverschiebung zwischen der rechtzeitigen Antwort und dem empfangenen Code zu bestimmen und mit den Mitteln (35, 35C) zur Generierung der rechtzeitigen Antwort und den Mitteln (E) zur Generierung der Vorausantwort verbunden ist;
   - Mittel (35C) zur Bestimmung der Positionierungsinformation des Empfängers (2) ausgehend von der bestimmten Phasenverschiebung;

   **dadurch gekennzeichnet, dass** der Codediskriminator (56) geeignet ist, um die Phasenverschiebung ausgehend von der folgenden Beziehung zu bestimmen:

   $$D = (I_E{}^2 + Q_E{}^2) - (I_F{}^2 + Q_F{}^2),$$

   in der:
   - D der Ausgang des Diskriminators der Codeschleife ist;
   - $I_E$ eine Korrelationsfunktion zwischen der Vorausantwort und der Inphasenkomponente des von seinem Träger demodulierten empfangenen Signals ist;
   - $Q_E$ eine Korrelationsfunktion zwischen der Vorausantwort und der Quadraturphasenkomponente des von seinem Träger demodulierten empfangenen Signals ist;
   - $I_F$ und $Q_F$ Inphasen- und Quadraturphasenkomponenten der Funktion der rechtzeitigen Antwort sind;
   mit

   $$I_F = I_P - C_{IF}$$

   $$Q_F = Q_P - C_{QF};$$

   wobei:
   - $I_P$ eine Korrelationsfunktion zwischen der rechtzeitigen Antwort und der Inphasenkomponente des von seinem Träger demodulierten empfangenen Signals ist;
   - $Q_P$ eine Korrelationsfunktion zwischen der rechtzeitigen Antwort und der Quadraturphasenkomponente des von seinem Träger demodulierten empfangenen Signals ist;
   - $C_{IF}$ und $C_{QF}$ Inphasen- und Quadraturphasenkomponenten einer unabhängigen Funktion der rechtzeitigen Antwort sind.

2. Empfänger (2) nach Anspruch 1, wobei die Mittel (E) zur Generierung der Vorausantwort geeignet sind, um die rechtzeitige Antwort um eine vordefinierte Dauer ($\Delta/2$) nach vorne zu verschieben, und wobei die Funktion der rechtzeitigen Antwort als Funktion der durch einen vordefinierten Faktor gewichteten vordefinierten Dauer ($\Delta/2$) variiert.

3. Empfänger (2) nach einem der Ansprüche 1 und 2, wobei die Verschiebungsmittel (36) Mittel (L) zur Generierung einer nacheilenden Antwort umfassen, die geeignet sind, um die rechtzeitige Antwort um dieselbe vordefinierte

Dauer ($\Delta/2$) zu verschieben, und wobei der Codediskriminator (56) mit den Mitteln (L) zur Generierung der nacheilenden Antwort verbunden ist, wobei die Funktion der rechtzeitigen Antwort als Funktion der Vorausantwort und der nacheilenden Antwort variiert.

**4.** Empfänger (2) nach einem der Ansprüche 1 bis 3, wobei:

- die Inphasen- und Quadraturphasenkomponenten $I_F$ und $Q_F$ der Funktion der rechtzeitigen Antwort die folgende Beziehung bestätigen:

$$\begin{cases} I_F = I_P - \dfrac{\Delta}{2} \dfrac{I_E + I_L}{2 - \Delta} \\ Q_F = Q_P - \dfrac{\Delta}{2} \dfrac{Q_E + Q_L}{2 - \Delta} \end{cases}$$

in der:
- $\Delta/2$ die Dauer des zwischen der rechtzeitigen Antwort und einer von der Vorausantwort oder der nacheilenden Antwort definierten Zeitbereichs ist;
- $I_L$ eine Korrelationsfunktion zwischen der nacheilenden Antwort und der Inphasenkomponente des von seinem Träger demodulierten empfangenen Signals ist; und
- $Q_L$ eine Korrelationsfunktion zwischen der nacheilenden Antwort und der Quadraturphasenkomponente des von seinem Träger demodulierten empfangenen Signals ist.

**5.** Empfänger (2) nach einem der Ansprüche 1 bis 3, wobei:

$I_F$ und $Q_F$ die Inphasen- und Quadraturphasenkomponenten der Funktion der rechtzeitigen Antwort sind; mit

$$\begin{cases} I_F = I_P - \dfrac{\Delta}{2} \sum_{0 \le k \le N} A_k \cos\left(\theta_k - \hat{\theta}\right) \\ Q_F = Q_P - \dfrac{\Delta}{2} \sum_{0 \le k \le N} A_k \sin\left(\theta_k - \hat{\theta}\right) \end{cases} \quad (2)$$

wobei:
- $\Delta/2$ die Dauer des zwischen der rechtzeitigen Antwort und einer von der Vorausantwort oder der nacheilenden Antwort definierten Zeitbereichs ist;
- $A_0$ die Amplitude des direkten Wegs ist,
- $A_k$ die Amplitude des $k^{ten}$ durch den Empfänger empfangenen Mehrwegs ist;
- $\theta_0$ die Phase des direkten Wegs ist;
- $\theta_k$ die Phase des $k^{ten}$ durch den Empfänger empfangenen Mehrwegs ist;
- $\hat{\theta}$ die Phase des Generators des lokalen Trägers des elektromagnetischen Signals ist, wenn die Schleife des Trägers im Gleichgewicht ist;
- N die Anzahl der durch den Empfänger empfangenen Mehrwege ist.

**6.** System (1) zur Bestimmung mindestens einer Positionierungsinformation eines Empfängers (2), wobei das System (1) mindestens einen Generator (4, 6) eines Signals umfasst, das Code genannt wird, **dadurch gekennzeichnet, dass** das System (1) ferner einen Empfänger (2) nach einem der Ansprüche 1 bis 5 umfasst.

**7.** Verfahren zum Bestimmen mindestens einer Positionierungsinformation eines Empfängers (2), der zu einem System (1) gehört, das mindestens einen Generator (4, 6) eines Signals umfasst, das Code genannt wird, wobei das Verfahren die folgenden Schritte umfasst, die durch den Empfänger (2) ausgeführt werden:

- Empfangen des durch den Generator (2) generierten Codes;

- Generieren eines Signals, das mit dem Code identisch ist und rechtzeitigen Antwort genannt wird;
- zeitliches Verschieben der rechtzeitigen Antwort zum Generieren mindestens einer Vorausantwort;
- Bestimmen einer Phasenverschiebung zwischen der rechtzeitigen Antwort und dem empfangenen Code;
- Bestimmen der Positionierungsinformation des Empfängers ausgehend von der bestimmten Phasenverschiebung;
**dadurch gekennzeichnet, dass** die Phasenverschiebung ausgehend von der folgenden Beziehung bestimmt wird:

$$D = (I_E^2 + Q_E^2) - (I_F^2 + Q_F^2),$$

in der:
- D der Ausgang des Diskriminators der Codeschleife ist;
- $I_E$ eine Korrelationsfunktion zwischen der Vorausantwort und der Inphasenkomponente des von seinem Träger demodulierten empfangenen Signals ist;
- $Q_E$ eine Korrelationsfunktion zwischen der Vorausantwort und der Quadraturphasenkomponente des von seinem Träger demodulierten empfangenen Signals ist;
- $I_F$ und $Q_F$ Inphasen- und Quadraturphasenkomponenten der Funktion der rechtzeitigen Antwort sind;
mit

$$I_F = I_P - C_{IF}$$

$$Q_F = Q_P - C_{QF};$$

wobei:
- $I_P$ eine Korrelationsfunktion zwischen der rechtzeitigen Antwort und der Inphasenkomponente des von seinem Träger demodulierten empfangenen Signals ist;
- $Q_P$ eine Korrelationsfunktion zwischen der rechtzeitigen Antwort und der Quadraturphasenkomponente des von seinem Träger demodulierten empfangenen Signals ist;
- $C_{IF}$ und $C_{QF}$ Inphasen- und Quadraturphasenkomponenten einer unabhängigen Funktion der rechtzeitigen Antwort sind.

# FIG.1

## FIG.2

## FIG.3

EP 2 342 576 B1

FIG.4

**FIG.5**

# EP 2 342 576 B1

## RÉFÉRENCES CITÉES DANS LA DESCRIPTION

**Documents brevets cités dans la description**

- EP 1793236 A